# EUROPEAN PATENT APPLICATION

(11) **EP 4 506 202 A2**
(43) Date of publication of application: **12.02.2025**
(21) Application number: 24155518.4
(22) Date of filing: 02.02.2024
(51) Int. Cl.: B60L 15/20, B60L 50/75, B60L 58/40

(54) **A COMPUTER-IMPLEMENTED METHOD FOR CONTROLLING A POWER PRODUCING ASSEMBLY OF A VEHICLE**

(30) Priority: 21.02.2023 EP 23157800; 18.08.2023 SE 2350983
(71) Applicant: VOLVO TRUCK CORPORATION, 405 08 Göteborg (SE)
(72) Inventor: BLOMGREN, Fredrik, 425 35 Hisings Kärra (SE); NORDHOLM, Linus, 436 40 Göteborg (SE); WILHELMSSON, Martin, 423 39 Torslanda (SE); SMIDEBRANT, Tobias, 415 16 Göteborg (SE)
(74) Representative: Valea AB

(57) **Abstract**

The present invention relates to a computer system (400) and a method for controlling a power producing assembly (130) of a vehicle (100), said power producing assembly (130) comprising a fuel cell system (110) and an energy storage system (120) comprising one or more batteries. The method comprises:
- identifying an upcoming driving event (200) of the vehicle (100), said upcoming driving event (200) comprising following a route (210) in a geographic location,
- identifying a current operating condition of the vehicle (100),
- -using driving event information, including power output from a fuel cell system, for driving events following the same route (210) which have previously been performed under determined operating conditions, and
- determining a desirable power output profile from the fuel cell system (110) during the identified upcoming driving event (200) for the current operating condition on the basis of the driving event information.

## Description

### TECHNICAL FIELD

The disclosure relates generally to control of a power producing assembly of a vehicle. In particular aspects, the disclosure relates to a computer-implemented method for controlling a power producing assembly which comprises a fuel cell system and an energy storage system. The disclosure also relates to a computer system, a computer program product, a control system, a non-transitory computer readable storage medium and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In recent years, fuel cell systems have been considered as one of power sources for producing electric power in different applications, e.g. in fuel cell electric vehicles. Typically, a fuel cell system is used with an energy storage system for providing electric power to various power consumers of the vehicles. The electric power may be used for powering one or more electric motors for creating a propulsion force to the vehicle during operation of the fuel cell electric vehicle, e.g. when the vehicle is performing a driving event. The fuel cell system and the energy storage system, respectively, need to produce appropriate amounts of electric power such that sufficient propulsion force is created for completing the driving event. There is a strive to develop improved technology relating to the control of a fuel cell system as well as an energy storage system, especially when a vehicle is performing a driving event.

### SUMMARY

According to a first aspect of the disclosure, a computer system comprising a processor device configured to control a power producing assembly of a vehicle according to claim 1 is provided. The power producing assembly comprises a fuel cell system and an energy storage system comprising one or more batteries, and the fuel cell system and the energy storage system are adapted to produce electric power for one or more energy consumers of the vehicle. The processor device is further configured to:
- identify an upcoming driving event of the vehicle, the upcoming driving event comprising following a route in a geographic location,
- identify a current operating condition of the vehicle,
- use driving event information, including power output from a fuel cell system, for driving events following the same route which have previously been performed under determined operating conditions, and
- determine a desirable power output profile from the fuel cell system during the identified upcoming driving event for the current operating condition on the basis of the driving event information.

The first aspect of the disclosure may seek to find an in at least some aspects improved computer system for controlling the power producing assembly. For example, it may ensure that the fuel cell system is producing an appropriate amount of electric power throughout the upcoming driving event. In other words, the fuel cell system would not produce a unnecessary high level of electric power when it is not required, and vice versa. As such, a technical benefit may include that the fuel cell system's efficiency is improved. Improved efficiency may lead to improved fuel economy and a reduced wear of the fuel cell system. Furthermore, the determination of desirable power output profile from the fuel cell system may be performed in a more efficient manner thanks to the information associated with the driving events following the same route which have previously been performed under determined operating conditions. The desirable power output profile may be determined simply by analyzing related driving event information, as opposed to conventional ways where the determination may be based on a complex calculation of power demands from one or more energy consumers and a subsequent power split between the fuel cell system and the energy storage system.

Herein the term "use" may encompass a variety of examples for handling the drive event information. For example, it may refer to any one of the following: identify and/or collect and/or retrieve driving event information, for instance from a storage unit, such as a database, which for instance may be located in the vehicle; receive driving event information which driving event information for instance have been transmitted from a transmitter not located in the vehicle, and determining driving event information by processing data, e.g. by employing mathematical operations, which is stored in a storage unit, such as a database, and/or which has been received from a transmitter not located in the vehicle. The driving event information may for instance have been collected and/or registered during or after the above-mentioned driving events following the same route which have previously been performed under determined operating conditions. By appropriately using the driving event information, including power output from a fuel cell system, for driving events following the same route which have previously been performed under determined operating conditions, it may be possible to learn from the information and to determine a desirable power that is preferably supplied by the fuel cell system at various time points during the same driving event. Accordingly, the desirable power output profile from the fuel cell system during the identified upcoming driving event may be determined. The desirable power output profile may, for example, be a power curve over time. It may be constant or may vary over time.

In some examples, the determination may be performed by the processor device onboard the vehicle and may be performed upon the identification of the upcoming driving event, before the start of the upcoming driving event. As such, a power split between the fuel cell system and the energy storage system during the upcoming driving event may be planned in advance, as opposed to conventional ways where the power split may be calculated in real-time during the driving event. A technical benefit may include that control of the power producing assembly may be further improved.

The previous driving events may be performed by following the same route under various determined operating conditions, which may be seen as a form of sampling. The operating conditions may be determined such that it may cover a wide range of different operating conditions. In this way, it may be possible to determine the desirable power output profile for the fuel cell system for the operating condition under which the vehicle is currently operated by using the driving event information where the driving event has previously been performed under the same or similar operating condition. As such, the determined desirable power output profile may be more accurate since it is intended to be employed for the operating condition that the vehicle currently has.

According to a second aspect of the disclosure, a computer-implemented method for controlling a power producing assembly of a vehicle by a processor device of a computer system according to claim 2 is provided. The power producing assembly comprises a fuel cell system and an energy storage system comprising one or more batteries, and the fuel cell system and the energy storage system are adapted to together produce electric power for one or more energy consumers of the vehicle. The method comprises:
- identifying an upcoming driving event of the vehicle, the upcoming driving event comprising following a route in a geographic location,
- identifying a current operating condition of the vehicle,
- using driving event information, including power output from a fuel cell system, for driving events following the same route which have previously been performed under determined operating conditions, and
- determining a desirable power output profile from the fuel cell system during the identified upcoming driving event for the current operating condition on the basis of the driving event information.

Technical benefits of the second aspect of the disclosure are largely analogous to the technical benefit of the first aspect of the disclosure. It shall also be noted that all examples of the second aspect of the disclosure are applicable to and/or combinable with all embodiments of the first aspect of the disclosure, and vice versa.

Purely by way of example, the features that "the fuel cell system and the energy storage system are adapted to together produce electric power for one or more energy consumers of the vehicle" may encompass that each one of the fuel cell system and the energy storage system is adapted to independently feed electric power to the one or more energy consumers. As such, though purely by way of example, the power producing assembly may be such that the fuel cell system can feed electric power to the one or more energy consumers without requiring that such electric power is transferred via the energy storage system.

The computer-implemented method as disclosed herein may be performed in the processor device, such as in one or more electronic control units. The processor device may comprise a communication unit configured to receive various information, e.g. the driving event information. The processor device may further comprise a computing unit for computing the desirable power output profile from the fuel cell system during the identified upcoming driving event for the current operating condition.

In some examples, including in at least one preferred example, optionally the operating condition comprise status information for the electric power producing assembly and at least one of the following parameters: vehicle speed, vehicle gross combination weight, ambient temperature, and coolant temperature. By including the above status information as well as the parameters, the desired power output profile may be determined in a more accurate way, since it is intended to be employed for the operating condition under which the vehicle is currently operated. Purely by way of example, the coolant may be a coolant adapted to cool at least a portion of the power producing assembly, such as the fuel cell system.

In some examples, including in at least one preferred example, optionally the method comprises:
- selecting one or more parameters of the current operating condition,
- in response to the selected one or more parameters of the current operating condition, determining the desirable power output profile from the fuel cell system during the upcoming driving event such that the status information of the electric power producing assembly is within a desirable range during the identified upcoming driving event.

A technical benefit may include that degradation of electric power producing assembly is reduced since the status information of the electric power producing assembly is within a desirable range during the entire upcoming driving event.

The method may, for instance, use or function as a lookup table. When one or more parameters of the current operating condition is selected as an input, the desirable power output profile may be determined as an output result. Thanks to this functionality, it may provide a flexibility for determining the desirable power output profile since the determination may be based on one specific parameter of the current operating condition or may be based on a combination of several parameters of the current operating condition. The combination of several parameters of the current operating condition may better reflect the vehicle's current operating status, thus a more suitable power output profile may be determined.

In some examples, including in at least one preferred example, optionally, determining the desirable power output profile from the fuel cell system comprises:
- estimating an initial power output profile from the fuel cell system during the upcoming driving event under the selected one or more parameters of the current operating condition on the basis of said driving event information, and
- offsetting at least a portion of the initial power output profile such that that said status information of the electric power producing assembly is within a desirable range during the identified upcoming driving event.

When one or more parameters of the current operating condition is selected as an input, an initial power output profile from the fuel cell system when operating under the selected operating condition is estimated. In some examples, the initial power output profile is estimated based on the driving event information gathered during the vehicle's operation under the same or similar condition. For instance, if one specific parameter is selected to represent the current operating condition, the driving event information from the vehicle's operation under the same or similar value of that parameter will be used for estimating the power output profile. Similarly, if multiple parameters are selected to represent the current operating condition, the driving event information from the vehicle's operation under the same or similar value of those parameters will be used. In some other examples, the initial power output profile is estimated based on an analytical approach, such as statistics prediction, of driving event information gathered during the vehicle's operation under various determined operating conditions. Thereafter, the desirable power output profile may be determined by offsetting the initial power output profile. Herein the term "offsetting" may be understood as moving the initial power output profile, typically set at a certain power level range, with an offset. Purely by way of example, the initial power output profile may be shifted from an intermediate power level to a lower power level by an offset. Moreover, as a non-limiting example, in the event that the initial power output profile is a first entity, such as power, as a function of a second entity, such as time, offsetting at least a portion of the initial power output profile may comprise adding the same constant value, be it positive or negative, to the first entity for every value of at least a portion of the second entity. By offsetting the initial power output profile to an appropriate level, the status information of the electric power producing assembly may be kept within a desirable range during the identified upcoming driving event.

In some examples, including in at least one preferred example, optionally the status information of the electric power producing assembly comprises at least one of the following: a state-of-energy level of the energy storage system, a temperature of the fuel cell system, a temperature of the energy storage system, a state-of-health level of the fuel cell system, and a state-of-health level of the energy storage system. As such, it provides the possibility to ensure more than one parameter of the fuel cell system and/or the energy storage system being in a desirable range during the entire driving event. In this case, more aspects of the fuel cell system and/or the energy storage system which may have an impact on the system performance may be considered. In some examples, it may be possible to select which parameter(s) of the status of information is/are wished to be within the desirable range, and the determined desirable power output profile may differ in dependence on the selected parameters.

To summarize, the desired power output profile may be determined where the required power is satisfied meanwhile one or more parameters of the status information of the electric power producing assembly is within a desirable range during the entire driving event. A more advanced and flexible method may therefore be provided.

In some examples, including in at least one preferred example, optionally determining the desirable power output profile from the fuel cell system during the upcoming driving event is performed by use of a predicting model. The predicting model may, for instance, be a machine learning model. The predicting model may learn to map a correlation between the desirable power output from a fuel cell system during the driving event and various operating conditions from the driving event information. The information may include power output from the fuel cell system during the driving event as well as corresponding operating condition under which the vehicle was operated when performing the driving event.

In some examples, including in at least one preferred example, optionally, the driving event information is obtained when same driving events at the same route have been performed, by real-world vehicles or by use of computer simulation, under determined operating conditions. The real-world vehicles may be the current vehicle and/or may be one or more vehicle that is different from the vehicle. Alternatively, it may also be possible to obtain the associated information by performing a computer simulation. The computer simulation may be performed a sufficient number of times, such that various operating conditions have been simulated.

In some examples, including in at least one preferred example, optionally, the identified upcoming driving event is a hill-climbing driving event.

In some examples, including in at least one preferred example, optionally, the method further comprises:
- in response to a determination of the desirable power output profile comprises at least a portion being higher than a threshold level, initiating a cooling action of the fuel cell system before start of the driving event.

The cooling action may include increasing a cooling capacity of the cooling system. In this way, the fuel cell system may be well-prepared for the upcoming driving event where a large amount of power may need to be produced by the fuel cell system. The fuel cell system may thereafter be operated under a desired temperature throughout the driving event. A technical effect may include that degradation of the fuel cell system may be further reduced.

According to a third aspect of the disclosure, a computer program product comprising program code for performing the method according to the second aspect of the disclosure is provided.

According to a fourth aspect of the disclosure, a control system comprising one or more control units configured to perform the method according to the second aspect of the disclosure is provided.

According to a fifth aspect of the disclosure, a non-transitory computer-readable storage medium comprising instructions is provided. The non-transitory computer-readable storage medium comprises instructions, which when executed by the processor device, cause the processor device to perform the method according to the second aspect of the disclosure.

According to a sixth aspect of the disclosure, a vehicle comprising an electric power producing assembly adapted to produce electric power for one or more energy consumers of the vehicle is provided. The vehicle further comprises the control system according to the fourth aspect of the disclosure.

According to a seventh aspect of the disclosure, a computer-implemented method for controlling a power producing assembly of a vehicle by a processor device of a computer system according to claim 15 is provided. The power producing assembly comprising a fuel cell system and an energy storage system comprising one or more batteries, wherein the fuel cell system and the energy storage system are adapted to together produce electric power for one or more energy consumers of the vehicle, the method comprises:
- obtaining driving event information, including power output from the fuel cell system, for driving events following the same route which have previously been performed under determined operating conditions,
- training a predicting model by use of the obtained information in order to establish a correlation between a desirable power output from a fuel cell system during the driving event and an operating condition for the driving event,
- identifying an operating condition of the vehicle, and
- using the predicting model to determine a desirable power output profile from a fuel cell system during the driving event under the identified operating condition for the driving event.

The seventh aspect of the disclosure may seek to find an in at least some aspects improved method for controlling the power producing assembly. In particular, it may ensure to determine the desirable power output from a fuel cell system for the driving event in an efficient and an accurate way. According to the present disclosure, it is achieved by use of a predicting model, which is trained by driving event information, including power output from the fuel cell system, for driving events following the same route which have been performed under determined operating conditions. The predicting model may function as a lookup table, wherein, when an operating condition is identified, a result of the desirable power output profile may be determined immediately. In this way, the determination may be performed in a more efficient way.

The previous driving events may be performed by following the same route under various determined operating conditions, where the determined operating conditions may preferably cover a plurality of operating conditions. In this way, it may be possible to determine the desirable power output profile for the identified operating condition by using the driving event information where the driving event has previously been performed under the same operating condition. As such, the determined desirable power output profile may be more accurate since it is intended to be employed to the operating condition that is identified.

In some examples, including in at least one preferred example, optionally, the operating condition comprise status information of the electric power producing assembly and at least one of the following parameters: vehicle speed, vehicle gross combination weight, ambient temperature, and coolant temperature.

In some examples, including in at least one preferred example, optionally, the method further comprises:
- selecting one or more parameters of the current operating condition,
- in response to the selected one or more parameters of the current operating condition, determining the desirable power output profile from the fuel cell system during the driving event such that the status information of the electric power producing assembly is within a desirable range during the driving event.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a schematic side view of an exemplary vehicle comprising a power producing assembly according to an aspect of the disclosure.
**FIG. 2** is a flowchart illustrating an exemplary method of controlling the power producing assembly shown in FIG. 1.
**FIG. 3** is a graph showing an exemplary driving event.
**FIG. 4A** is a graph illustrating one example of a state-of-energy level profile of the energy storage system during a driving event where the method has been used in contrast to one example of a state-of-energy level profile of the energy storage system during the driving event where the method has not been used.
**FIG. 4B** is a graph illustrating one example of a power output profile of the fuel cell system during a driving event where the method has been used in contrast to one example one example of a power output profile of the fuel cell system during the driving event where the method has not been used.
**FIG. 5** is a graph showing another driving event.
**FIG. 6A** is a graph illustrating one example of a temperature of the energy storage system as well as the fuel cell system during a driving event where the method has been used in contrast to one example of a temperature of the energy storage system as well as the fuel cell system during the driving event where the method has not been used.
**FIG. 6B** is a graph illustrating one example of a desirable power output profile of the fuel cell system during the driving event of **FIG. 5** where the method has been used in contrast to one example one example of a power output profile of the fuel cell system during the driving event of **FIG. 5** where the method has not been used.
**FIG. 6C** is a graph illustrating one example of a power output profile of the energy storage system during the driving event of **FIG. 5** where the method has been used in contrast to one example one example of a power output profile of the energy storage system during the driving event of **FIG. 5** where the method has not been used.
**FIG. 7** is a graph showing yet another driving event.
**FIG. 8A** is a graph illustrating one example of a temperature of the energy storage system during the driving event of **FIG. 7** where the method has been used in contrast to one example of a temperature of the energy storage system during the driving event the driving event of **FIG. 7** where the method has not been used.
**FIG. 8B** is a graph illustrating one example of a desirable power output profile of the fuel cell system during the driving event of **FIG. 7** where the method has been used in contrast to one example one example of a power output profile of the fuel cell system during the driving event where the method has not been used.
**FIG. 8C** is a graph illustrating one example of a power output profile of the energy storage system during the driving event of **FIG. 7** where the method has been used in contrast to one example one example of a power output profile of the energy storage system during the driving event of **FIG. 7** where the method has not been used.
**FIG. 9** is a graph showing yet another driving event.
**FIG. 10A** is a graph illustrating one example of a state-of-energy level profile of the energy storage system during the driving event of **FIG. 9** where the method has been used in contrast to one example of a state-of-energy level profile of the energy storage system during the driving event of **FIG. 9** where the method has not been used.
**FIG. 10B** is a graph illustrating one example of a desirable power output profile of the fuel cell system during the driving event of **FIG. 9****.**
**FIG. 10C** is a graph illustrating one example of a vehicle speed during the driving event of **FIG. 9** where the method has been used in contrast to one example one example of a vehicle speed during the driving event of **FIG. 9** where the method has not been used.
**FIG. 11** is a schematic diagram of an exemplary computer system for implementing examples disclosed herein, according to one example.

### DETAILED DESCRIPTION

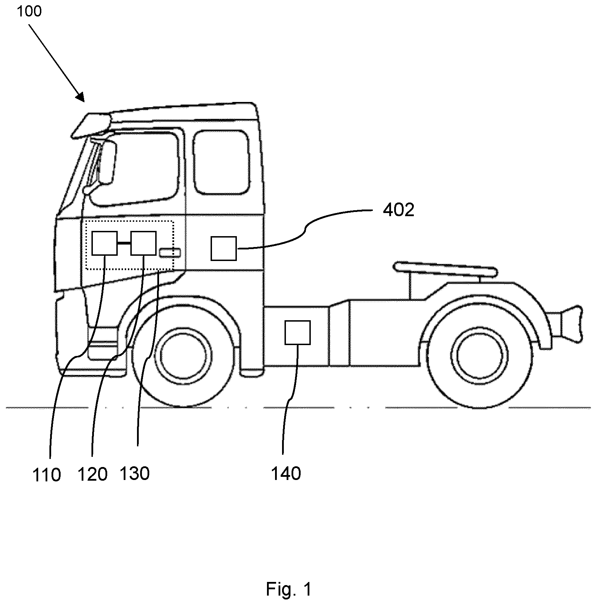

**FIG. 1** depicts a vehicle 100, which is exemplified by a fuel cell electric truck. Even though a fuel cell electric truck is shown, it shall be noted that the disclosure is not limited to this type of vehicle, but it may also be used for other electric vehicles, such as a bus, construction equipment, e.g., a wheel loader or an excavator.

The vehicle 100 comprises a power producing assembly 130. The electric power producing assembly 130 further comprises a fuel cell system 110 and an energy storage system 120 comprising one or more batteries, and they are adapted to produce electric power. The electric power will then be fed to one or more energy consumes 140 (e.g. electric motor(s)), to create a propulsion force for propelling the vehicle 100, for instance using one or more cables (not shown). The vehicle 100 further comprises a control system 402. The control system 402 may comprise one or more control units, which may also be referred to as one or more processor devices 402. The one or more processor devices 402 may be configured to control the electric power producing assembly 130 using a method according to an example of the disclosure. The vehicle 100 may further comprise a navigation system (not shown) in which the processor device 402 may be integrated. The navigation system may comprise one or more sensors, e.g. a global positioning system (GPS) sensor, configured to position the vehicle 100 on a road that it is travelling on.

When performing a driving event 200, the power producing assembly 130 may need to provide an appropriate amount of electric power, such that sufficient power is provided to the one or more electric consumers 140 (e.g. electric motor(s)) to create the propulsion force needed for performing the driving event. In some examples, the fuel cell system 110 may produce a constant amount of electric power throughout the driving event 200. The constant amount of electric power may, for instance, be defined as a maximum allowable power level that may be set by the processor device 402. During the driving event 200, when a transient power demand is lower than the maximum allowable power level, excessive power that is produced by the fuel cell system 110 may be used to charge the energy storage system 120. When the transient power demand is higher than the maximum allowable power level, the lacking amount of power may be supplied by the energy storage system 120. However, if the energy storage system 120 is not able to supply the required lacking amount of electric power, the maximum allowable power level from the fuel cell system 110 may need to be increased temporarily by the processor device 402.

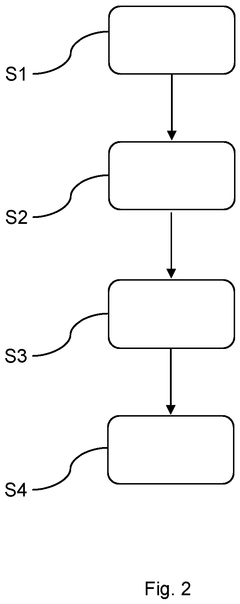

**FIG. 2** is a flowchart illustrating an exemplary method of controlling the power producing assembly 130. The method may be applied to any type of electric vehicles, e.g., the truck 100 shown in **FIG. 1****.** The method comprises the steps listed in the following, which, unless otherwise indicated, may be taken in any suitable order. The method may be performed by the processor device 402, see **FIG. 1****.**

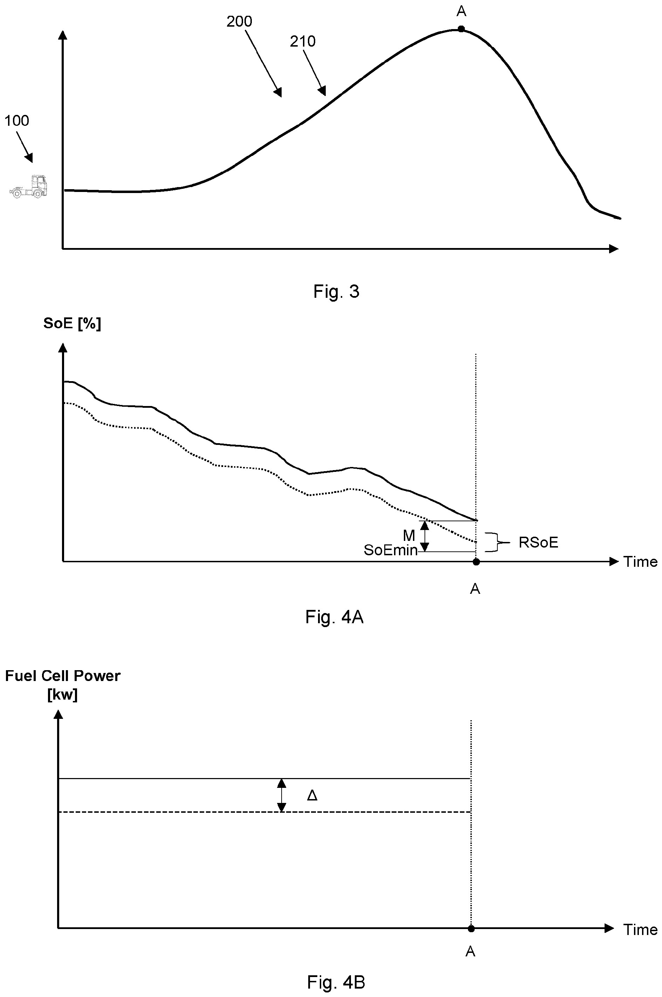

**S1:** identifying an upcoming driving event 200 of the vehicle 100, the upcoming driving event 200 comprising following a route 210 in a geographic location. The driving event 200 may be identified with help of the one or more sensors of the navigation system (not shown) and/or on map information stored in the navigation system (not shown). **FIG. 3** shows an exemplary driving event 200 where a hill-climbing driving event 200 is ahead of the vehicle 100. Once the driving event 200 is identified, it may be reported to the processor device 402 to proceed with the next step.

**S2:** identifying a current operating condition of the vehicle 100. The operating condition may comprise status information for the electric power producing assembly 130 and at least one of the following parameters: vehicle speed, vehicle gross combination weight, ambient temperature, and coolant temperature, wherein the status information for the electric power producing assembly 130 may comprise at least one of the following: a state-of-energy level of the energy storage system 120, a temperature of the fuel cell system 110, a temperature of the energy storage system 120, a state-of-health level of the fuel cell system 110, and a state-of-health level of the energy storage system 120. These parameters may be monitored by various sensors and may be reported to the processor 402 constantly. Purely by way of example, the coolant may be a coolant adapted to cool at least a portion of the power producing assembly 130, such as the fuel cell system 110.

**S3:** using driving event information, including power output from a fuel cell system 110, for driving events 200 following the same route 210 which have previously been performed under determined operating conditions. The driving event information may be obtained from vehicles, which may be the own vehicle 100 and/or any other vehicles, that have previously performed the same driving events 200 following the same route 210. The driving event information may also be obtained from computer simulation where a virtual vehicle has performed the same driving events 200 a plurality of times. The driving route may have been created in the computer environment such that it may represent the same route 210 from the real world. The driving events 200 may have been performed a sufficient number of times, preferably that a plurality of different operating conditions have been covered. The information may be recorded each time a driving event 200 has been carried out and may be recorded in the form of data in a database. The information may include power output from the fuel cell system 110 during the driving event as well as corresponding operating condition under which the vehicle was operated when performing the driving event 200.

**S4:** determining a desirable power output profile from the fuel cell system 110 during the identified upcoming driving event 200 for the current operating condition on the basis of the driving event information. This step may additionally include the following two sub steps:
**S4-1:** selecting one or more parameters of the current operating condition, and
**S4-2:** in response to the selected one or more parameters of the current operating condition, determining the desirable power output profile from the fuel cell system 110 during the upcoming driving event 200 such that the status information of the electric power producing assembly 130 is within a desirable range duringthe identified upcoming driving event.

In some examples, determining the desirable power output profile from the fuel cell system 110 comprises:
**S4-2-1:** estimating an initial power output profile from the fuel cell system 110 during the upcoming driving event 200 under the selected one or more parameters of the current operating condition on the basis of said driving event information, and
**S4-2-2:** offsetting at least a portion of the initial power output profile such that that said status information of the electric power producing assembly 130 is within a desirable range during the identified upcoming driving event 200.

In some examples, it may be preferred to select several parameters, since the combination of several parameters may better reflect the vehicle's current operating status, thus a more suitable power output profile may be determined. In some other examples, wherein one specific parameter may be more vital than the rest parameters, it may be preferred to select that specific parameter to represent the current operating condition of the vehicle 100.

When the one or more parameters of the current operating condition is selected as an input, an initial power output profile from the fuel cell system when operating under the selected operating condition is estimated. In some examples, the initial power output profile is estimated based on the driving event information gathered during the vehicle's operation under the same or similar condition. For instance, if one specific parameter is selected to represent the current operating condition, the driving event information from the vehicle's operation under the same or similar value of that parameter will be used for estimating the power output profile. Similarly, if multiple parameters are selected to represent the current operating condition, the driving event information from the vehicle's operation under the same or similar value of those parameters will be used. In some other examples, the power output profile is estimated based on an analytical approach, such as statistics prediction, of driving event information gathered during the vehicle's operation under various determined operating conditions. Thereafter, the desirable power output profile may be determined by offsetting at least a portion of the initial power output profile.

By use of the aforementioned information discussed in **S3,** it may be possible to learn from the information and to determine the desirable power output profile from the fuel cell system 110 during the upcoming driving event 200. The desirable power output profile from the fuel cell system 110 may define a power level that is preferably supplied by the fuel cell system 100 at various time points throughout the driving event 200. The power output profile may be a constant level, which may be defined by the maximum allowable power level or may vary over time. When the power level varies over time, it may determine when, for instance, at which time period, to temporarily increase or decrease the maximum allowable power level during the driving event 200, such that the fuel cell system 110 would not produce unnecessarily a high level of electric power when it is not required, and vice versa, and meanwhile the status information of the electric power producing assembly 130 is within a desirable range upon completing the identified upcoming driving event. **FIG. 4A** illustrates one example where a state-of-energy level of the energy storage system 120, as one parameter of the status information, is adjusted to a desirable range at the end of the driving event 200 by use of the method. Related details will be explained in the following paragraphs. In some examples, it may be possible to ensure more than one parameter of the status information being in a desirable range upon completing the driving event 200. In this case, more aspects of the fuel cell system 110 and/or the energy storage system 120 which may have an impact on the system performance may be considered. In some examples, it may be possible to select which parameter(s) of the status of information is/are wished to be within the desirable range, and the determined desirable power output profile may differ in dependence on the selected parameter(s).

The method may, for instance, use or function as a lookup table. When one or more parameters of the current operating condition is selected as an input, the desirable power output profile may be determined as an output result. In this way, the determination of the desirable power output profile may be performed before the start of the driving event 200. As a result, a power split between the fuel cell system 110 and the energy storage system 120 during the upcoming driving event may be planned in advance.

In some examples, the determination may be performed by use of a predicting model. The predicting model may be a machine-learning model. In these examples, another exemplary method of controlling the power producing assembly 130 is provided. The method comprises:
- obtaining driving event information, including power output from the fuel cell system 110, for driving events 200 following the same route 210 which have been performed under determined operating conditions,
- training a predicting model by use of the obtained information in order to establish a correlation between a desirable power output from a fuel cell system during the driving event 200 and an operating condition for said driving event,
- identifying an operating condition of the vehicle 100, and
- using the predicting model to determine a desirable power output profile from a fuel cell system 110 during the driving event under the identified operating condition for said driving event 200.

The predicting model may be trained offline at a remote place or may be trained onboard in the processor device 402 of the vehicle 100. The predicting model may be a machine-learning model and different types of self-learning model may be employed. Other types of machine learning model may be potentially used, such as linear regression or non-linear regression model, are known and will therefore not be discussed in more detail herein.

In some examples, when the determination of the desirable power output profile comprises at least a portion being higher than a threshold level, the processor device 402 may initiate a cooling action of the fuel cell system 110 before start of the driving event. The cooling action may include increasing a cooling capacity of the cooling system (not shown). In this way, the fuel cell system 110 may be well-prepared for the upcoming driving event 200 where a large amount of power may need to be produced. The fuel cell system 110 may thereafter be operated under a desired temperature throughout the driving event 200. Purely by way of example, the determination whether or not the desirable power output profile comprises at least a portion that is higher than the threshold level may be carried out by comparing an average power output value of the desirable power output profile to the threshold level. As another non-limiting example, the determination whether or not the desirable power output profile comprises at least a portion that is higher than the threshold level may be carried out by comparing each one of a plurality of points of the desirable power output profile to the threshold level.

**FIG. 4A** is a graph illustrating an example of a state-of-energy level profile of the energy storage system 120 during the driving event 200 of **FIG. 3** where the method has been used in contrast to an example of a state-of-energy level profile of the energy storage system 120 during the same driving event where the method has not been used. **FIG. 4B** shows an example of a corresponding power output profile of the fuel cell system 110 during the same driving event 200 where the method has been used in contrast to an example of a power output profile of the fuel cell system 110 during the same driving event 200 where the method has not been used.

The solid line represents the scenario where the method has not been used. It may also be seen as driving event information for the driving event 200 that has been previously performed. According to the figure, the state-of-energy level of the energy storage system 120 at the end of the driving event 220, indicated as point A, has a margin M to a lower limit SoEmin of the state-of- energy level. Purely by way of example, the lower limit SoEmin of the state-of- energy level may be a fixed value that is associated with the energy storage system 120. The corresponding power output from the fuel cell system 110 is indicated by the solid line in **FIG. 4B****.** The above information together with the operating condition under which the vehicle 100 was operated when performing the driving event 200 may be recorded in a database. When the vehicle 100 is going to perform the same driving event 200, under the same operating condition, it may be possible to use the above information and learn from the information that the state-of-energy level of the energy storage system 120 at the end of the driving event 220 was not in a desirable range RSoE. There is room to further reduce the margin M such that the electric power that needs to be supplied by the fuel cell system 110 may be reduced. As such, the processor device 402 may determine a desirable power output profile from the fuel cell system 110 under the driving event 200 by offsetting, as indicated by symbol Δ in **FIG. 4B****,** at least a portion of an initial power output profile, depicted by the solid line in **FIG. 4A****,** to a lower power level. The resultant desirable power output profile is represented by the dashed line in **FIG. 4A****.** Consequently, the margin M is reduced, and as a result, fuel consumption as well as wear and/or cooling of the fuel cell system 120 may be decreased. It shall be noted that **FIG. 4A** and **FIG. 4B** showing the power output profile being at a constant level is purely an example. In the **FIG. 4A** and **FIG. 4B** example, the entire initial power output profile has been offset. However, in other examples, as will be presented below, only a portion of the initial power output profile is offset.

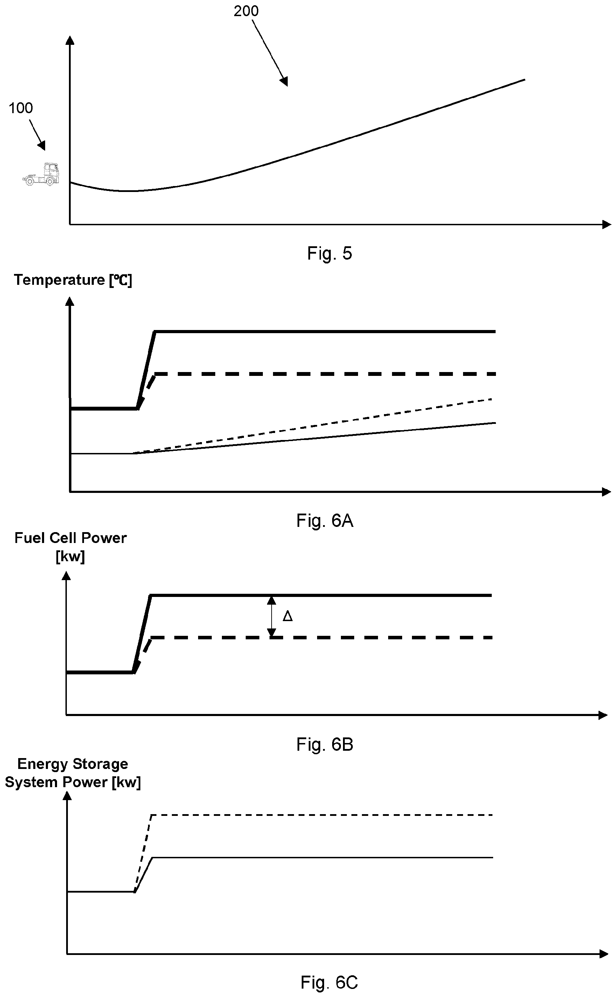

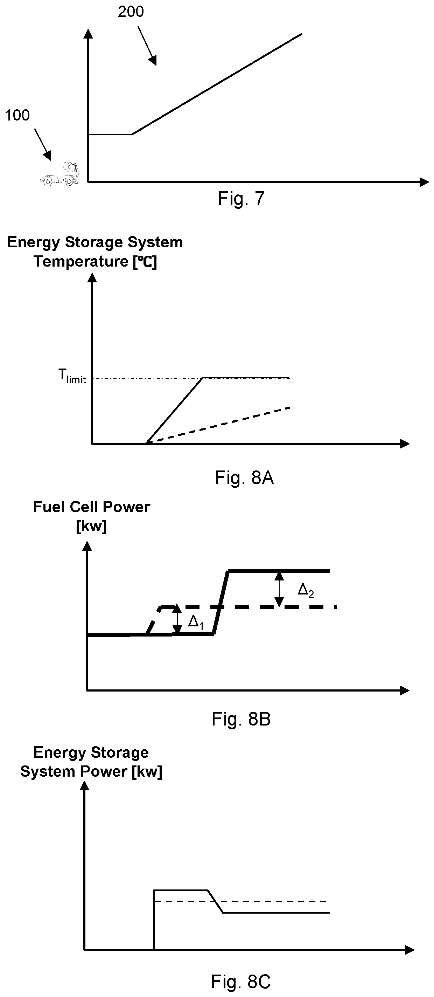

It should be noted that although the above example uses the state-of-energy level of the energy storage system 120 as an example, similar examples could instead of, or in addition to, the state-of-energy level of the energy storage system 120, use one or more other implementations of the status information. Purely by way of example, the status information may comprise one or more of the following: a temperature of the fuel cell system 110, a temperature of the energy storage system 120, a state-of-health level of the fuel cell system 110, and a state-of-health level of the energy storage system 120. As such, it is envisaged that graphs similar to the **FIG. 4A** and **FIG. 4B** graphs may be generated for any one of the above-mentioned examples of the status information and that the computer system 400 or the method of the present disclosure may comprise determining an output profile for the fuel cell system 110 such that the status information, e.g. the temperature of the fuel cell system 110, a temperature of the energy storage system 120, a state-of-health level of the fuel cell system 110, and a state-of-health level of the energy storage system 120, is within a desirable range during the identified upcoming event. To this end, it should be noted that the examples presented hereinbelow with reference to **FIG. 5** **-** **FIG. 6C** use the temperature of the fuel cell system 110 as well as temperature of the energy storage system 120 as the status information whereas the example presented hereinbelow with reference to **FIG. 7** **-** **FIG. 8C** uses the temperature of the energy storage system 120 as the status information.

Moeover, is should be noted that the status information may also comprise a combination of one or two entities, such as a combination of one or more of the following: state-of-energy level of the energy storage system 120, the temperature of the fuel cell system 110, a temperature of the energy storage system 120, a state-of-health level of the fuel cell system 110, and a state-of-health level of the energy storage system 120. As a non-limiting example, such a combination may be obtained by using one or more weight factors making it possible to combine different entities, such as a state-of-energy level and a temperature.

In addition to the above, it should not be overlooked that irrespective of which entity or entities that are used for forming the status information, the operating condition may also comprise at least one of the following parameters: vehicle speed, vehicle gross combination weight, ambient temperature, and coolant temperature, for instance a coolant temperature of a coolant of the power producing assembly 130. As such, purely by way of example, the **FIG. 4A** and **FIG. 4B** graphs may be associated with an operating condition of the vehicle, such as the vehicle speed, vehicle gross combination weight, ambient temperature, and coolant temperature.

As such, the computer system 400 or the method of the present disclosure may comprise identifying a current operating condition of the vehicle 100, which operating condition may be represented by one or more of the above-mentioned parameters, and select information, such as information obtainable from graphs such as the **FIG. 4A** and **FIG. 4B** graphs, being associated with the same values of the selected parameters.

In the event that information from previously performed driving events are not associated with the same values of the selected parameters, the computer system 400 or the method of the present disclosure may interpolate between information from previously performed driving events.

**FIG. 5** shows another example of a driving event 200 where climbing a long ascent slope is anticipated. The bold solid line in **FIG. 6A** represents the temperature behavior of the fuel cell system 110 during the previous driving event 200 and the regular solid line in **FIG. 6A** represents the temperature behavior of the energy storage system 120 during the previous driving event 200. Similarly, the bold solid line in **FIG. 6B** represents power output from the fuel cell system 110 during the previous driving event 200 and the regular solid line in **FIG. 6C** represents power output from the energy storage system 200 during the previous driving event 200. To summarize, the solid lines represent the scenarios when the method has not been used, and these may be seen as the drive event information for the driving event 200 that has been previously performed. When a new driving event 200 is identified, the solid lines may also represent an estimated initial behavior of the respective parameters, including an initial power output profile from the fuel cell system 110, when the vehicle 100 operates under the same conditions. It can be seen from the figures, that the fuel cell system 110 was operated at a high-power level and a high temperature during the previous driving event 200, while the energy storage system 120 was operated at medium power level. It may be learnt from the information that the power from the fuel cell system 110 was set unnecessarily high, which may cause degradation of the fuel cell system 110. By offsetting, as indicated by symbol Δ in **FIG. 6B****,** least a portion of the initial power output profile of the fuel cell system 110 to a medium level, as illustrated by the dashed line in **FIG. 6B****,** the temperature of the fuel cell system 110 is reduced, as shown by the bold dashed line in **FIG. 6A****,** while the temperature of the energy storage system 120, represented by the regular dashed line in **FIG. 6A****,** is still kept within the medium level. As a result, the temperature of the fuel cell system 110 as well as the temperature of the energy storage system 120 are kept within a desirable range during the entire driving event 200. In the **FIG. 6A** and **FIG. 6B****,** the example, a constant portion of the initial power output profile is offset.

**FIG. 7** shows another example of a driving event 200 where climbing a short steep slope is anticipated. The solid line in **FIG. 8A** represents the temperature behavior of the energy storage system 110 during the previous driving event 200. Moreover, the bold solid line in **FIG. 8B** represents power output from the fuel cell system 110 and the solid line in **FIG. 8C** represents power output from the energy storage system 120 during the previous driving event 200, respectively. This may be seen as the driving event information for the driving event 200 that has been previously performed. When a new driving event 200 is identified, these solid lines may also represent an estimated initial behavior of the respective parameters, including an initial power output profile from the fuel cell system 110, when the vehicle 100 operates under the same or similar conditions. It can be seen from the drive event information that the fuel cell system 110 was operated at a moderate power level in the beginning of the driving event 200 and was raised to a medium high level from the middle of the driving event 200, while the energy storage system 120 was operated at a high power level. It can be learnt that during the previous driving event 200, the high power level of the energy storage system 120 has entailed the energy storage system 120 reaching its thermal limit Tₗᵢₘᵢₜ. By offsetting least a portion of the initial power output profile from the fuel cell system 110 to an intermedium level and operating the fuel cell system 110 to the intermedium level during the entire driving event 200, as illustrated by dashed line in **FIG. 8B****,** the temperature of the energy storage system 120 is kept within the upper limit during the entire driving event 200, as shown by the dashed line in **FIG. 8A****.** In the **FIG. 8A** and **FIG. 8B****,** the example, two portions of the initial power output profile is offset with different offset values Δ₁ and Δ₂.

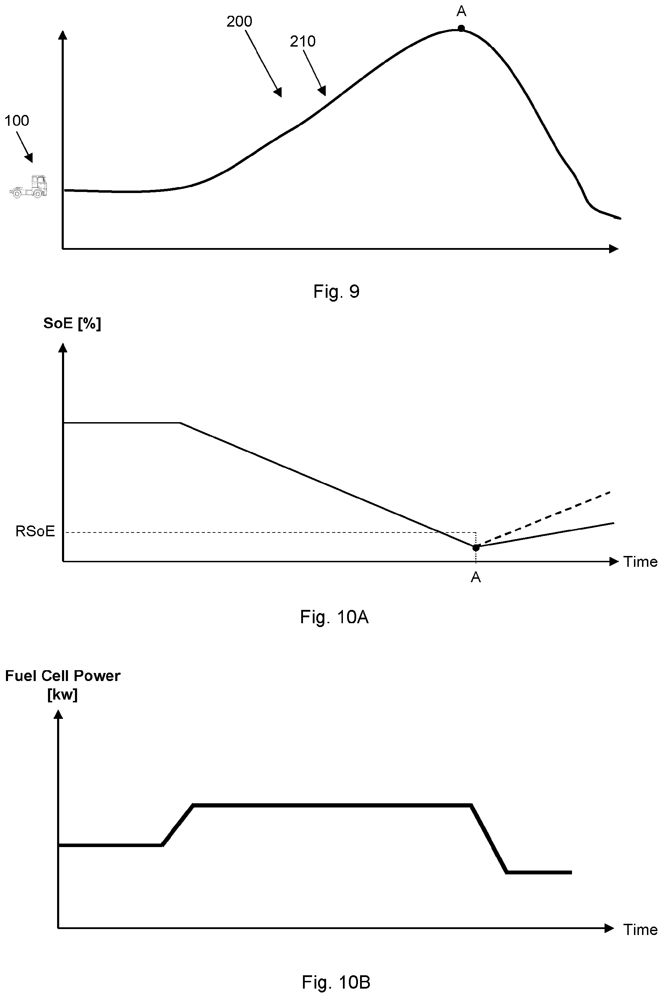

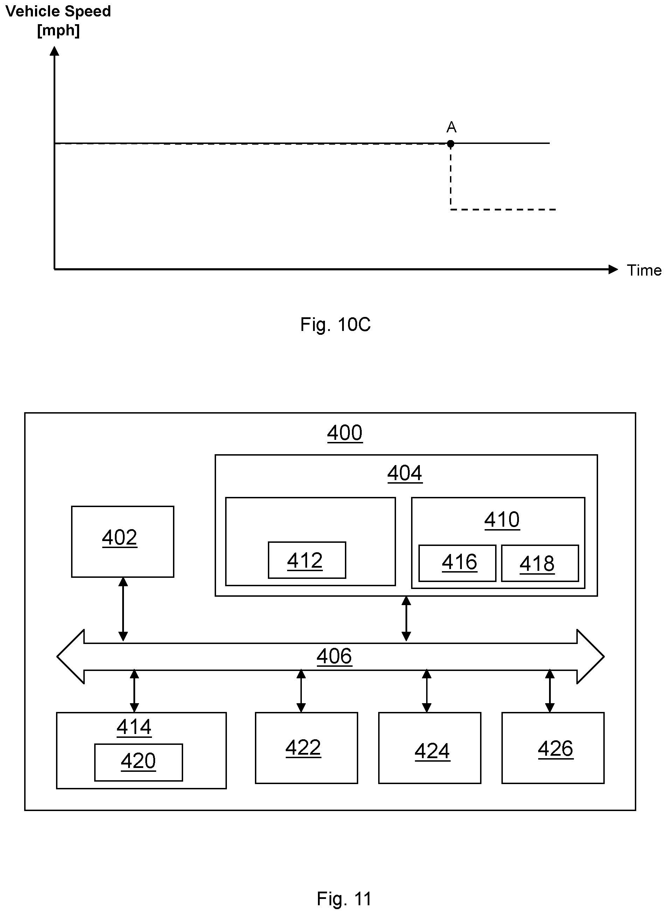

**FIG. 9** shows the example of **FIG. 4** driving event 200 where an uphill-downhill driving situation is anticipated. The solid line in **FIG. 10A** represents the state-of-energy level of the energy storage system 120 during the previous driving event 200. Moreover, the bold solid line in **FIG. 10B** represents power output from the fuel cell system 110 and the normal solid line in **FIG. 10C** represents a vehicle speed during the previous driving event 200, respectively. This may be seen as the driving event information for the driving event 200 that has been previously performed. When a new driving event 200 is identified, these solid lines may also represent the estimated behavior of the respective parameters when the vehicle 100 operates under the same or similar conditions. In this example, it can be seen from **FIG 10A** that at the end of climbing section point A, the state-of-energy level of the energy storage system 120 is within the desirable range R_{SoE}. As such, there is no need to offset the power level of the fuel cell system 110 and thus the estimated initial power output profile from the fuel cell system 110 in **FIG. 10B** will be determined as the desirable power output profile. Moreover, it may be learnt from the information that during the downhill driving, the vehicle was operated in a speed where auxiliary brakes are activated, meaning that a portion of the available brake energy is dispersed to ambient and not for charging the energy storage system 120. As such, it may be desirable to reduce the vehicle speed such that more of the available brake power will convert to electric energy for charging the energy storage system 120, as shown by the dashed line in **FIG. 10A****.**

The above examples show that the power output profile is estimated based on the driving event information gathered during the vehicle's operation under the same or similar condition. It shall be understood that, in some other examples, the power output profile may be estimated using statistics prediction, based on driving event information gathered during the vehicle's operation under various determined operating conditions. The statistics prediction may be a process of using correlations between variables and output to predict a new output once the variables have been changed. For instance, the parameters of the operation conditions may be set as the variables and the power output profile of the fuel cell system may be set as the output and by performing the driving events a sufficient number of times under the various operating conditions, it may be possible to establish such correlations and predict a power output profile for a selected operating condition using statistics prediction. Moreover, the above examples show that the desirable power output profile is determined such that the parameters of the status information, such as fuel cell system's temperature, energy storage system's temperature and/or state-of-energy level of the energy storage system is kept within a desirable range during entire driving event. It shall be understood that the method is not limited to these parameters, and it may be possible to select which parameter(s) of the status of information is/are wished to be within the desirable range. It would be sufficient for the person skilled in the art to understand that irrespective of which parameter is selected, once the parameter is selected, the desirable power output can be determined by fine-tuning the estimated power output using historical driving event data.

**FIG. 11** is a schematic diagram of a computer system **400,** also referred to as a control system, for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include one or more electronic control units **402,** such as the control unit **402** illustrated in **FIG. 1****,** which may also be referred to as a processor device, a memory **404,** and a system bus **406.** The computer system **400** may include at least one computing device having the control unit **402.** The system bus **406** provides an interface for system components including, but not limited to, the memory **404** and the control unit **402.** The control unit **402** may include any number of hardware components for conducting data or signal processing or for executing computer code stored in memory **404.** The control unit **402** (e.g., processor device) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The control unit may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the control unit **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with a control unit **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program product **420** stored on a transitory or non-transitory computer-usable or computer-readable storage medium (e.g., single medium or multiple media), such as the storage device **414,** which includes complex programming instructions (e.g., complex computer-readable program code) to cause the control unit **402** to carry out the steps described herein. Thus, the computer-readable program code can comprise software instructions for implementing the functionality of the examples described herein when executed by the control unit **402.** The control unit **402** may serve as a controller or control system for the computer system **400** that is to implement the functionality described herein, such as for the control system 4 illustrated in **FIG. 2****.**

The computer system **400** also may include an input device interface **422** (e.g., input device interface and/or output device interface). The input device interface **422** may be configured to receive input and selections to be communicated to the computer system **400** when executing instructions, such as from a keyboard, mouse, touch-sensitive surface, etc. Such input devices may be connected to the processor device **402** through the input device interface **422** coupled to the system bus **406** but can be connected through other interfaces such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may also include a communications interface **426** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relaive terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system (400) comprising a processor device (402) configured to control a power producing assembly (130) of a vehicle (100) , said power producing assembly (130) comprising a fuel cell system (110) and an energy storage system (120) comprising one or more batteries, wherein said fuel cell system (110) and said energy storage system (120) are adapted to produce electric power for one or more energy consumers of the vehicle (100), the processor device (402) further being configured to:
- identify an upcoming driving event (200) of the vehicle (100), said upcoming driving event (200) comprising following a route (210) in a geographic location,
- identify a current operating condition of the vehicle (100),
- use driving event information, including power output from a fuel cell system (110), for driving events following the same route (210) which have previously been performed under determined operating conditions, and
- determine a desirable power output profile from the fuel cell system (110) during the identified upcoming driving event (200) for the current operating condition on the basis of the driving event information.

2. A computer-implemented method for controlling a power producing assembly (130) of a vehicle (100), by a processor device (402) of a computer system (400), said power producing assembly (130) comprising a fuel cell system (110) and an energy storage system (120) comprising one or more batteries, wherein said fuel cell system and said energy storage system (120) are adapted to together produce electric power for one or more energy consumers of said vehicle (100) , the method comprises:
- identifying (S1) an upcoming driving event (200) of the vehicle (100), said upcoming driving event (200) comprising following a route (210) in a geographic location,
- identifying (S2) a current operating condition of the vehicle (100),
- using (S3) driving event information, including power output from a fuel cell system, for driving events (200) following the same route (210) which have previously been performed under determined operating conditions, and
- determining (S4) a desirable power output profile from the fuel cell system (110) during the identified upcoming driving event (200) for the current operating condition on the basis of the driving event information.

3. The method according to claim 2, wherein the operating condition comprise status information for the electric power producing assembly and at least one of the following parameters: vehicle speed, vehicle gross combination weight, ambient temperature, and coolant temperature.

4. The method according to claim 3, wherein the method further comprises:
- selecting (S4-1) one or more parameters of the current operating condition,
- in response to the selected one or more parameters of the current operating condition, determining (S4-2) the desirable power output profile from the fuel cell system (110) during the upcoming driving event (200) such that said status information of the electric power producing assembly (130) is within a desirable range during the identified upcoming driving event (200).

5. The method according to claim 4, wherein determining the desirable power output profile from the fuel cell system (110) comprises:
- estimating (S4-2-1) an initial power output profile from the fuel cell system (110) during the upcoming driving event (200) under the selected one or more parameters of the current operating condition on the basis of said driving event information, and
- offsetting (S4-2-2) at least a portion of said initial power output profile such that that said status information of the electric power producing assembly (130) is within a desirable range during the identified upcoming driving event (200)

6. The method according to any one of claims 3-5, wherein said status information of the electric power producing assembly (130) comprises at least one of the following: a state-of-energy level of the energy storage system (120), a temperature of the fuel cell system (110), a temperature of the energy storage system (120), a state-of-health level of the fuel cell system (110), and a state-of-health level of the energy storage system (120).

7. The method according to any one of claims 2-6, wherein determining the desirable power output profile from the fuel cell system (110) during the upcoming driving event (200) is performed by use of a predicting model.

8. The method according to any one of claims 2-7, wherein the driving event information is obtained when the same driving events (200) at the same route (210) have been performed, by real-world vehicles (100) or by use of computer simulation, under determined operating conditions.

9. The method according to any one of claims 2-8, wherein the identified upcoming driving event (200) is a hill-climbing driving event (210).

10. The method according to any one of claims 2-9, wherein the method further comprises:
- in response to a determination of the desirable power output profile comprises at least a portion being higher than a threshold level, initiating a cooling action of the fuel cell system before start of the driving event.

11. A computer program product comprising program code for performing, when executed by the processor device, the method of any one of claims 2 - 10.

12. A control system comprising one or more control units configured to perform the method of any one of claims 2-10.

13. A non-transitory computer-readable storage medium comprising instructions, which when executed by the processor device, cause the processor device (402) to perform the method of any one of claims 2 - 10.

14. A vehicle (100) comprising an electric power producing assembly (130) adapted to feed electric power to an electric power consuming assembly of said vehicle (100), and the control system according to claim 12.

15. A computer-implemented method for controlling a power producing assembly of a vehicle (100), by a processor device (402) of a computer system, said power producing assembly comprising a fuel cell system and an energy storage system (120) comprising one or more batteries, wherein said fuel cell system and said energy storage system (120) are adapted to together produce electric power for one or more energy consumers of said vehicle (100) , the method comprises:
- obtaining driving event information, including power output from the fuel cell system (110), for driving events following the same route (210) which have been performed under determined operating conditions,
- training a predicting model by use of the obtained information in order to establish a correlation between a desirable power output from a fuel cell system during the driving event (200) and an operating condition for said driving event,
- identifying an operating condition of the vehicle (100), and
- using the predicting model to determine a desirable power output profile from a fuel cell system (110) during the driving event under the identified operating condition for said driving event (200).

16. The method according to claim 15, wherein the operating condition comprise status information of the electric power producing assembly and at least one of the following parameters: vehicle speed, vehicle gross combination weight, ambient temperature, and coolant temperature.

17. The method according to claims 15-16, wherein the method further comprises:
- selecting one or more parameters of the current operating condition,
- in response to the selected one or more parameters of the current operating condition, determining the desirable power output profile from the fuel cell system (110) during the driving event (200) such that the status information of the electric power producing assembly is within a desirable range during the driving event (200).
